# EUROPÄISCHE PATENTSCHRIFT

(11) **EP 4 400 758 B1**
(45) Veröffentlichungstag und Bekanntmachung des Hinweises auf die Patenterteilung: **11.03.2026**
(21) Anmeldenummer: 23151487.8
(22) Anmeldetag: 13.01.2023
(51) Int. Cl.: F17C 6/00, F17C 9/00

(54) **MULTI-KRYOSPEICHERSYSTEM**
MULTI-CRYO STORAGE SYSTEM
SYSTÈME DE STOCKAGE CRYOGÉNIQUE MULTIPLE

(43) Veröffentlichungstag der Anmeldung: 17.07.2024
(73) Patentinhaber: MAGNA STEYR Fahrzeugtechnik GmbH & Co KG, 8041 Graz (AT)
(72) Erfinder: BARTLOK, Guido, 8010 Graz (AT)
(74) Vertreter: Zangger, Bernd

(56) Entgegenhaltungen:
- DE-U1- 202019 103 696
- FR-A1- 3 066 249
- US-B2- 10 865 943
- US-B2- 11 415 084
- US-B2- 7 913 496

## Beschreibung

### Gebiet der Erfindung

Die vorliegende Erfindung betrifft ein Multi-Kryospeichersystem, umfassend zumindest zwei Kryobehälter zur Speicherung von Wasserstoff, insbesondere als mobiles Multi-Kryospeichersystem zur Speicherung von Wasserstoff für den Antrieb eines Kraftfahrzeuges.

### Stand der Technik

Es ist bekannt, dass mobile Kryospeichersysteme verwendet werden, um den für den Antrieb erforderlichen Wasserstoff in einem Kraftfahrzeug mitzuführen.

Es gibt auch Fahrzeuge mit zwei Tanks (Doppeltankanlagen) oder mehreren Tanks (Multitankanlagen), insbesondere wenn große Mengen Kraftstoff benötigt werden und/oder der geometrische Bauraum eine Aufteilung in multiple Speicherbehälter gleicher oder unterschiedlicher Größe bedingt. Im Allgemeinen sind mobile multiple Flüssigwasserstoffspeichersysteme so konstruiert, dass die Kryobehälter jeweils technisch vollumfassend sind und voneinander autark funktionieren. Die Kryobehälter versorgen dabei zusammen denselben Verbraucher mit Kraftstoff oder jeweils separate Verbraucher (zum Beispiel Brennstoffzellenmodule).

Üblicherweise weisen Multitankanlagen verschiedene Nachteile auf. Fällt beispielsweise in einem Kryobehälter eine wesentliche Komponente aus, verbleibt in der Regel die restliche Wasserstoffmenge in diesem Speicher ungenutzt, wodurch sich die Reichweite des Fahrzeuges verkürzt.

In den einzelnen Kryobehältern müssen die Drücke im Innentank höher sein, als der Versorgungsdruck in den Leitungen zum Verbraucher. Sind Kryobehälter beispielsweise unterschiedlich groß bzw. erfolgt eine unterschiedliche Entnahme, können sich unterschiedliche Kraftstofflevels, -temperaturen und -drücke in den Behältern einstellen, mit negativen Effekten, z.B. auf eine anschließende Betankung.

Aus der US 10 865 943 B2 ist ein System zur Speicherung und Abgabe von Fluiden in mehreren Behältern bekannt, das Folgendes umfasst: einen Primärspeicherbehälter zum Speichern eines gasförmigen Fluids in verflüssigter und dampfförmiger Form; wobei das gasförmige Fluid bei Standardtemperatur und -druck in gasförmiger Form vorliegt, aber in verflüssigter und dampfförmiger Form in dem Primärspeicherbehälter gespeichert wird; einen Server-Speicherbehälter zum Speichern des gasförmigen Fluids in verflüssigter und dampfförmiger Form; eine Pumpvorrichtung, die in Fluidverbindung mit dem primären Speicherbehälter steht, um das Fluid aus diesem aufzunehmen, unter Druck zu setzen und es an eine Auslassleitung zu liefern; wobei die Auslassleitung in Fluidverbindung mit dem Server-Speicherbehälter steht; eine Versorgungsleitung, die in Fluidverbindung mit dem Serverspeicherbehälter steht, um das Fluid daraus aufzunehmen und es an einen Endverbraucher abzugeben; einen ersten Verdampfer, der so betrieben werden kann, dass er das Fluid erhitzt, das aus dem Primärspeicherbehälter durch die Auslassleitung fließt.

Die US 7 913 496 B2 lehrt eine Vorrichtung zur Abgabe eines Prozessfluids, das bei einer kryogenen Temperatur gelagert wird, die umfasst: (a) einen Speicherbehälter, der einen thermisch isolierten Kryoraum zum Speichern des Prozessfluids definiert; (b) eine kryogene Pumpe mit einem Saugeinlass, der mit dem Kryoraum in Verbindung steht, und einem Auslass, der mit einer Förderleitung in Verbindung steht; (c) einen Wärmetauscher, der entlang der Förderleitung angeordnet ist, so dass das durch die Förderleitung fließende Prozessfluid durch den Wärmetauscher fließt; (d) einen Drucksensor zum Messen des Prozessfluiddrucks in der Förderleitung stromabwärts des Wärmetauschers; und (e) eine elektronische Steuerung, die programmiert ist, um: (i) ein Signal zu überwachen, das für den Prozessfluiddruck repräsentativ ist, der von dem Drucksensor gemessen wird; (ii) das Signal zu verarbeiten, um aus dem gemessenen Prozessfluiddruck zu bestimmen, wann die Leistung der kryogenen Pumpe beeinträchtigt ist; und (iii) ein Signal an einen Bediener der Vorrichtung zu senden, das anzeigt, wenn die elektronische Steuerung feststellt, dass die Leistung der kryogenen Pumpe unter einen vorbestimmten Schwellenwert für den volumetrischen Wirkungsgrad gesunken ist.

Dokument DE 20 2019 103696 U1 zeigt ein System zum Verwalten des Füllstands von Flüssiggas in einem Paar von Tanks, die dazu eingerichtet sind, Gas in flüssigem Zustand zu speichern, wobei das Paar von Tanks einen ersten Tank und einen zweiten Tank umfasst, die jeweils mit einer Vorrichtung ausgestattet sind, die dazu eingerichtet ist, die Verdampfung des Gases in flüssigem Zustand zu ermöglichen, wobei die Vorrichtungen durch eine Verbindungsleitung fluidisch miteinander verbunden sind, die ferner durch eine Zuführleitung fluidisch verbunden ist mit einem Motor eines Fahrzeugs, der dazu eingerichtet ist, das verdampfte Gas, das im flüssigen Zustand in dem Paar von Tanks gespeichert ist, für seinen Betrieb zu nutzen, wobei das System Folgendes umfasst: Erfassungsmittel, die dazu eingerichtet sind, in dem ersten und dem zweiten Tank jeweils einen Flüssiggasfüllstand zu erfassen; Hydraulikmittel, die an der Verbindungsleitung zwischen dem ersten bzw. dem zweiten Tank und der Zuführleitung fluidisch zwischengeschaltet sind; eine Steuereinheit, die mit den Erfassungsmitteln und den Hydraulikmitteln elektrisch verbunden ist, wobei die Steuereinheit dazu eingerichtet ist, ein von den Erfassungsmitteln empfangenes Signal in Bezug auf die Flüssiggasfüllstände zu empfangen und zu erarbeiten, und die Hydraulikmittel auf der Grundlage der Erarbeitung zu steuern, wobei die Erarbeitung eine Berechnung einer Differenz zwischen einem ersten Füllstand von Gas, das in dem ersten Tank gespeichert ist und einem zweiten Füllstand von Gas, das in dem zweiten Tank gespeichert ist, umfasst, die Steuereinheit die Hydraulikmittel dazu betätigt, zu verhindern, dass das Gas aus dem Tank mit dem niedrigeren Füllstand an gespeichertem Flüssiggas zu dem Motor strömt, wenn die Differenz zwischen dem ersten und dem zweiten Füllstand größer ist als ein voreingestellter Wert, und dazu, zu ermöglichen, dass Gas aus beiden Tanks zu dem Motor strömt, wenn die Differenz kleiner ist als der voreingestellte Wert, wobei der voreingestellte Wert dieser Differenz größer ist als 20% des Volumens der Tanks.

Aus der FR 3 066 249 A1 ist eine Vorrichtung zur Kühlung von Flüssiggas für eine Anlage zur Energieerzeugung, insbesondere an Bord eines Schiffes, bekannt, die umfasst : optional einen Haupttank zur Speicherung von Flüssiggas, einen ersten Ballon zur Abscheidung von gekühltem Flüssiggas, dessen Eingang mit einem ersten Ende einer ersten Leitung verbunden ist, deren zweites Ende dazu bestimmt ist, in das in dem Haupttank enthaltene Flüssiggas eingetaucht zu werden, die erste Leitung geeignet ist, den ersten Ballon mit Flüssiggas zu versorgen, Mittel zum Unterdrucksetzen des ersten Ballons in Bezug auf den Haupttank, die so konfiguriert sind, dass sie in dem ersten Ballon einen Betriebsdruck anlegen, der niedriger als der Druck in dem Haupttank ist, Verdampfungsmittel, die mit der ersten Leitung und/oder dem Einlass des ersten Ballons ausgestattet sind, so dass mindestens ein Teil des Flüssiggases, das dem ersten Ballon zugeführt wird, verdampft wird und mindestens ein anderer Teil dieses Flüssiggases, auf die Sättigungstemperatur bei dem Betriebsdruck in dem ersten Ballon abgekühlt wird.

### Zusammenfassung der Erfindung

Es ist eine Aufgabe der Erfindung, Multi-Kryospeichersysteme der genannten Art anzugeben, die zumindest einige der genannten Probleme reduzieren und insbesondere eine Multi-Kryospeichersystem, umfassend zumindest zwei Kryobehälter zur Speicherung von Wasserstoff, anzugeben, das es auf kostengünstige Art ermöglicht, den Betriebsdruck in beiden/mehreren Innentanks zu minimieren.

Die Lösung der Aufgabe erfolgt durch ein Multi-Kryospeichersystem mit den Merkmalen gemäß Anspruch 1.

Das Multi-Kryospeichersystem umfasst zumindest zwei Kryobehälter zur Speicherung von Wasserstoff, nämlich ein Primärspeichersystem mit einem Innentank und einem Außenbehälter und zumindest ein Sekundärspeichersystem, mit einem weiteren Innentank und einem weiteren Außenbehälter, wobei die beiden Kryobehälter, über eine kryogene Verbindungsleitung hydraulisch kommunizierend verbunden sind, wobei im Innentank des Kryobehälters des Primärspeichersystems mindestens eine Kryopumpe angeordnet ist, die flüssigen und gasförmigen Wasserstoff drucklos und/oder druckbeaufschlagt, ein- oder mehrstufig, und tiefkalt einem Wärmeübertrager zuführt, der den Wasserstoff erwärmt und weiter zu einem Verbraucher fördert, mit höherem Druck als dem Druck im Innentank.

Erfindungsgemäß verfügt ein Multi-Kryospeichersystem über zumindest zwei Kryobehälter, jeweils mit einem Innentank und einem Außenbehälter, wobei zwischen Innentank und Außenbehälter üblicherweise jeweils ein Isolationsraum, insbesondere ein Vakuumraum, eingerichtet ist. Die beiden Kryobehälter, insbesondere die beiden Innenbehälter, sind eine kryogene Verbindungsleitung hydraulisch kommunizierend, also fluidleitend, verbunden.

Im Innentank eines der Kryobehälter, nämlich im Innentank des Primärspeichersystems, ist mindestens eine Kryopumpe angeordnet. Durch die Kryopumpe kann flüssiger und gasförmiger Wasserstoff tiefkalt einem Wärmeübertrager zugeführt werden, der den Wasserstoff erwärmt und weiter zu einem Verbraucher fördert. Die Förderung zum Verbraucher kann dabei mit einem Druck erfolgen, der höher ist, als der Druck im Innentank des Primärspeichersystems.

Durch die Verwendung der Verbindungsleitung zwischen den beiden Innentanks, kann eine einzige Kryopumpe, im Primärspeichersystem, für beide Kryobehälter verwendet werden. Es genügt eine Kryopumpe, um Kraftstoff aus mehreren Kryobehältern zum Verbraucher zu fördern. Mit der Kombination Kryopumpe und Verbindungsleitung lässt sich der Betriebsdruck in beiden/mehreren Innentanks minimieren und kann kleiner sein als der kleinstmögliche Versorgungsdruck zum Verbraucher. Die Vorrichtung ermöglicht im regulären Betrieb auch einen Massentransfer und gegebenenfalls den Ausgleich von Kraftstoffmengen.

Die Verbindungsleitung verfügt erfindungsgemäß über zumindest ein, bevorzugt zwei, tanknahe Absperrventile, die dazu eingerichtet sind, einen hydraulischen Druckausgleich zu ermöglichen und bevorzugt auch dazu, im Falle eines Lecks die Verbindung zwischen den beiden Innentanks über die Verbindungsleitung zu schließen, um die beiden Tanks voneinander abzuschotten. Die tanknahen Absperrventile können bei dem jeweiligen Tank, bevorzugt jeweils im Isolationsraum zwischen Innentank und Außenbehälter angeordnet sein. Die Kombination von Verbindungsleitung und beidseitigen Absperrventilen ermöglicht die geregelte Freigabe von Ausgleichsströmungen zwischen den Kryobehältern. Diese bewirkt einen Druckausgleich zwischen den kommunizierenden Innentanks.

Erfindungsgemäß ist ausschließlich im Primärspeichersystem eine oder mehrere Kryopumpen angeordnet. Im Sekundärspeichersystem ist erfindungsgemäß keine Kryopumpe angeordnet.

Die Bezeichnung "Multi-Kryospeichersystem" umfasst in dieser Schrift Kryospeichersysteme die zumindest zwei Kryobehälter umfassen, also auch Doppeltanksysteme.

Weiterbildungen der Erfindung sind in den abhängigen Ansprüchen, der Beschreibung sowie den beigefügten Zeichnungen angegeben.

Vorzugsweise ist die Kryopumpe im Normalbetrieb vollständig von kryogenem Fluid umgeben und/oder der Antrieb der Kryopumpe dazu eingerichtet, bei tiefkalten Temperaturen zu arbeiten. Hierdurch wird eine geringere elektrische Leistungsaufnahme für die Kaltgasverdichtung ermöglicht.

Die Verbindungsleitung weist, bevorzugt nach den tanknahen Absperrventilen, besonders bevorzugt lediglich Leitungsenden auf, die vorzugsweise in einen bodennahen Bereich des jeweiligen Innentanks geführt sind. Die Verbindungsleitung ist bevorzugt im Wesentlichen eine einfache Leitung, die abgesehen von den Absperrventilen keine weiteren Komponenten umfasst. Die Verbindungsleitung ist bevorzugt eine von Entnahmevorrichtungen, wie Entnahmeleitungen der beiden Kryobehälter unabhängige Leitung.

Bevorzugt ist das Primärspeichersystem dazu eingerichtet, dass ein Teilstrom des erwärmten Wasserstoffs, also des entnommenen Wasserstoffs nach dem Wärmeübertrager, über eine Rückführleitung in den Innentank zurückgeführt werden kann, um den Innentankdruck zu erhöhen und bevorzugt auf einem Mindestdruck zu halten. Vorzugsweise ist in der Rückführleitung ein Absperrventil für die Gasrückführung zum Innentank angeordnet.

Vorzugsweise ist ein Druckminderer, bevorzugt mit nachgeschaltetem Drucksicherheitsventil, in der Rückführleitung für die Gasrückführung zum Innentank verbaut. Hierdurch kann der Druck für die Gasrückführung in den Innentank begrenzt werden.

Bevorzugt ist zwischen der Kryopumpe und dem Verbraucher ein Pufferbehälter für warmen Wasserstoff angeordnet. Hierdurch kann eine eventuell auftretende schwankende Förderleistung der Kryopumpe ausgeglichen werden.

Das Primär- und das Sekundärspeichersystem können vorzugsweise über jeweilige Betankungsschnittstellen separat, also jeder Tank für sich, betankt werden.

Insgesamt umfasst das Sekundärspeichersystem bevorzugt im Wesentlichen die gleichen Komponenten, wie das Primärspeichersystem, mit Ausnahme davon, dass im Sekundärspeichersystem keine Kryopumpe angeordnet ist. In einer anderen bevorzugten Ausführungsform entfällt im Sekundärspeichersystem zumindest eine oder mehrere Komponenten, die für die Druckerhöhung, Entnahme und/oder Konditionierung des Wasserstoffs im Primärspeichersystem vorgesehen sind, insbesondere ein Wärmetauscher und/oder eine Entnahmeleitung und/oder ein oder mehrere Absperrventile in der Entnahmeleitung. Kosten, Systemgewicht und Speicherkapazität können dadurch optimiert werden.

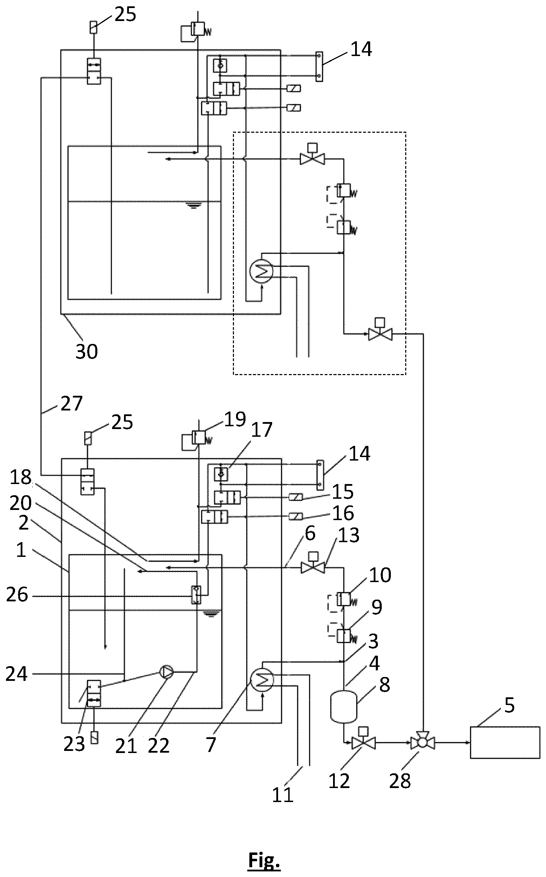

### Kurzbeschreibung der Zeichnung

Die Erfindung wird im Folgenden beispielhaft unter Bezugnahme auf die Zeichnung beschrieben.
- Fig.: ist eine schematische Darstellung eines erfindungsgemäßen Multi-Kryospeichersystems.

### Detaillierte Beschreibung der Erfindung

In der Fig. ist ein erfindungsgemäßes Multi-Kryospeichersystem dargestellt, welches aus zwei Kryobehältern besteht, also eine sog. Doppeltankanlage. Ein Primärspeichersystem (in der unteren Hälfte der Fig. dargestellt) umfasst einen Innentank 1 und einen Außenbehälter 2, mit einem Isolationsraum als Zwischenraum zwischen Innentank 1 und Außenbehälter 2.

Das Primärspeichersystem kann tiefkaltes Gas und/oder kryogene Flüssigkeit aus dem Innentank 1 mittels einer leistungsgesteuerten druckerhöhenden Kryopumpe 21, beispielsweise über eine Druckleitung 22 der Kryopumpe die an einer Leitungsverbindung 3 in eine Versorgungsleitung 4 mündet, zu einem Verbraucher 5 fördern. Gas kann über eine Gasentnahmeleitung 24 als verlängerter Ansaugstutzen der Kryopumpe 21 aus dem Innentank 1 entnommen werden. Durch ein pumpnahes Absperrventil 23 für das Umschalten von LH2 auf GH2, kann wahlweise Flüssigkeit aus dem Innentank 1 durch die Pumpe 21 gefördert werden.

Die Kryopumpe 21 ist vorzugsweise vollständig von kryogenem Fluid umgeben, d.h. auch der Antrieb der Pumpe 21 arbeitet bei tiefkalten Temperaturen, wodurch eine geringe elektrische Leistungsaufnahme für die Kaltgasverdichtung ermöglicht wird.

Gas kann zudem durch Öffnen eines GH2 Tankventils 15 und/oder Flüssigkeit durch Öffnen eines LH2 Tankventils 16 aus dem Innentank 1 in die Entnahmeleitung strömen. Gas kann dabei über eine kombinierte Sicherheits- und Gasentnahmeleitung 18 dem Innentank 1 entnommen werden. Nach dem GH2 Tankventil 15 kann ein Rückschlagvenil 17 für die Gasentnahme vorgesehen sein. Aus der kombinierte Sicherheits- und Gasentnahmeleitung 18 kann Gas auch durch ein Druckentlastungssicherheitsventil 19 auch nach außen abgegeben werden.

Das kryogene Fluid wird nach der Entnahme aus dem Innentank 1, insbesondere nach der Kryopumpe 21 und nach den Tankventilen 15, 16, über einen Wärmeübertrager 7 geleitet, dabei durch Wärmezufuhr, vorzugweise mittels Kühlwassers 11 des Verbrauchers 5, vollständig in die Gasphase überführt und zugleich für den Verbraucher 5 ausreichend erwärmt. Die Kryopumpe 21 fördert den Wasserstoff bei Bedarf mit höherem Druck zum Verbraucher 5 als im Innentank 1 vorliegt. Durch die Entnahme von Kraftstoff aus dem Primärspeichersystem sinkt der Druck und die Kraftstoffmenge in dessen Innentank 1.

Um eine eventuelle auftretende schwankende Förderleistung der Kryopumpe 21 auszugleichen, kann zusätzlich zwischen Pumpe 21 und Verbraucher 5 ein Pufferbehälter 8 für warmen Wasserstoff angeordnet werden. In der Entnahmeleitung kann vor dem Verbraucher 5 ein Absperrventil 12 für die H2-Versorgung zum Verbraucher 5 angeordnet sein.

Ein Sekundärspeichersystem 30, ist über eine kryogene Verbindungsleitung 27 hydraulisch kommunizierend mit dem Primärspeichersystem verbunden. Die Verbindungsleitung 27 verfügt über tanknahe Absperrventile 25, an jedem der beiden Kryobehälter, die einerseits die Steuerung des hydraulischen Ausgleichs ermöglichen und andererseits im Falle eines Lecks Verbindungsleitung 27 und Innentanks 1 voneinander abschotten. Die Absperrventile 25 können im jeweiligen Isolationsraum angeordnet sein. Die Verbindungsleitung 27 kann nach den Absperrventilen 25 nach unten in den jeweiligen Innentank 1 geführt sein, in einen Bereich, in dem sich üblicherweise flüssiger Wasserstoff befindet.

Primär- und Sekundärspeichersystem können über jeweilige Betankungsschnittstellen 14 separat betankt werden. Die Betankung kann über ein Wechselventil 26 in der Entnahmeleitung und eine LH2 Einlassleitung 20 in den Innentank 1 erfolgen.

Die beiden Versorgungsleitungen 4 von Primär- und Sekundärspeichersystem können, bevorzugt nach den Absperrventilen 12, an einer Entnahme-Verbindung 28 zusammengeführt sein, um durch eine gemeinsame Versorgungsleitung den Verbraucher 5 mit dem gespeicherten Medium zu versorgen.

Ist der Innentankdruck des Primärspeichersystems geringer als der Innentankdruck des Sekundärspeichersystems kann durch Öffnen der Absperrventile 25 eine hydraulische Ausgleichströmung durch die Verbindungsleitung 27 erfolgen. Diese Ausgleichströmung transferiert Kraftstoff vom Sekundärspeichersystem zum Primärspeichersystems bis sich die Drücke ausgeglichen haben oder die Absperrventile 25 den Strömungspfad unterbrechen.

Sind die Drücke zwischen Primär- und Sekundärspeichersystem ausgeglichen und besteht Bedarf den Druck im Innentank 1 des Primärspeichersystems zu erhöhen bzw. zu halten, kann Gas über Ventil 13 in einer Gasrückführleitung 6, die an der Leitungsverbindung 3 von der Entnahmeleitung nach dem Wärmetauscher 7 abzweigt, zurück in den Innentank 1 transferiert werden. Um den Druck für die Gasrückführung in den Innentank 1 zu begrenzen, kann bei Bedarf ein Druckminderer 9 mit nachgeschaltetem Drucksicherheitsventil 10 in der Gasrückführleitung 6 verbaut werden.

Das Sekundärspeichersystem 30 umfasst im Wesentlichen die gleichen Komponenten, wie das Primärspeichersystem, wobei aber im Sekundärspeichersystem keine Kryopumpe angeordnet ist. Die übereinstimmenden Komponenten sind im Sekundärspeichersystem 30 an denselben Positionen des Kryotanks des Sekundärspeichersystems 30 dargestellt, die sie entsprechend auch im Primärspeichersystem haben.

Zumindest eine oder mehrere Komponenten, die für die Druckerhöhung, Entnahme und/oder Konditionierung des Wasserstoffs im Primärspeichersystem vorgesehen sind, nämlich Komponenten in dem Bereich, der in der Fig. durch ein gestricheltes Rechteck eingezeichnet ist, können im Sekundärspeichersystem optional auch entfallen, also nicht verbaut sein. Insbesondere kann das Sekundärspeichersystem keine Entnahmeleitung und/oder keinen Wärmetauscher und/oder keinen Druckminderer und/oder keine Drucksicherheitsventil und/oder kein Absperrventil in der Entnahmeleitung umfassen.

### Bezugszeichenliste

- 1: Innentank des Primärspeichersystems
- 2: Außenbehälter
- 3: Leitungsverbindung
- 4: Versorgungsleitung
- 5: Verbraucher
- 6: Gasrückführleitung
- 7: Wärmeübertrager
- 8: Pufferbehälter
- 9: Druckminderer
- 10: Drucksicherheitsventil
- 11: Kühlwasserkreislauf
- 12: Absperrventil für H2 Versorgung zum Verbraucher
- 13: Absperrventil für Gasrückführung zum Innentank
- 14: Schnittstelle für Betankung
- 15: GH2 Tankventil
- 16: LH2 Tankventil
- 17: Rückschlagventil für die Gasentnahme
- 18: kombinierte Sicherheits- und Gasentnahmeleitung
- 19: Druckentlastungssicherheitsventil
- 20: LH2 Einlassleitung in den Innentank
- 21: Kryopumpe(n)
- 22: Druckleitung der Kryopumpe
- 23: Pumpnahes Absperrventil für das Umschalten von LH2 auf GH2
- 24: Gasentnahmeleitung als verlängerter Ansaugstutzen der Kryopumpe
- 25: Tanknahes Absperrventil zur Verbindungsleitung
- 26: Wechselventil
- 27: Verbindungsleitung zwischen Primär- und Sekundärspeichersystem
- 28: Entnahme-Verbindung zwischen Primär- und Sekundärspeichersystem
- 30: Sekundärspeichersystem

## Patentansprüche

1. Multi-Kryospeichersystem, umfassend zumindest zwei Kryobehälter zur Speicherung von Wasserstoff, nämlich ein Primärspeichersystem mit einem Innentank (1) und einem Außenbehälter (2) und zumindest ein Sekundärspeichersystem (30), mit einem weiteren Innentank und einem weiteren Außenbehälter, wobei die beiden Kryobehälter über eine kryogene Verbindungsleitung (27) hydraulisch kommunizierend verbunden sind,
wobei im Innentank (1) des Kryobehälters des Primärspeichersystems mindestens eine Kryopumpe (21) angeordnet ist, die Wasserstoff drucklos und/oder druckbeaufschlagt, ein- oder mehrstufig, und tiefkalt einem Wärmeübertrager (7) zuführt, der den Wasserstoff erwärmt und weiter zu einem Verbraucher (5) fördert, mit höherem Druck als dem Druck im Innentank, wobei im Sekundärspeichersystem (30) keine Kryopumpe angeordnet ist,
(1), **dadurch gekennzeichnet , dass** die Verbindungsleitung (27) über zumindest ein, bevorzugt zwei, tanknahe Absperrventile (25) verfügt, die dazu eingerichtet sind, einen hydraulischen Druckausgleich zu ermöglichen, und dass die Kryopumpe flüssigen und gasförmigen Wasserstoff zuführt.

2. Multi-Kryospeichersystem nach Anspruch 1,
**dadurch gekennzeichnet , dass** die Kryopumpe (21) im Normalbetrieb vollständig von kryogenem Fluid umgeben ist und/oder der Antrieb der Kryopumpe (21) dazu eingerichtet ist, bei tiefkalten Temperaturen zu arbeiten.

3. Multi-Kryospeichersystem nach zumindest einem der vorhergehenden Ansprüche,
**dadurch gekennzeichnet , dass** die Verbindungsleitung (27), bevorzugt nach den tanknahen Absperrventilen (25), lediglich Leitungsenden aufweist, die vorzugsweise in einen bodennahen Bereich des jeweiligen Innentanks (1) geführt sind und/oder dass die Verbindungsleitung (27) eine von Entnahmevorrichtungen der beiden Kryobehälter unabhängige Leitung ist.

4. Multi-Kryospeichersystem nach zumindest einem der vorhergehenden Ansprüche,
**dadurch gekennzeichnet , dass** das Primärspeichersystem dazu eingerichtet ist, dass ein Teilstrom des erwärmten Wasserstoffs, also des entnommenen Wasserstoffs nach dem Wärmeübertrager (7), über eine Rückführleitung in den Innentank (1) zurückgeführt werden kann, um den Innentankdruck zu erhöhen, bevorzugt über ein Absperrventil (13) für die Gasrückführung zum Innentank (1).

5. Multi-Kryospeichersystem nach zumindest einem der vorhergehenden Ansprüche,
**dadurch gekennzeichnet , dass** ein Druckminderer (9), bevorzugt mit nachgeschaltetem Drucksicherheitsventil (10), in der Rückführleitung für die Gasrückführung zum Innentank (1) verbaut ist.

6. Multi-Kryospeichersystem nach zumindest einem der vorhergehenden Ansprüche,
**dadurch gekennzeichnet , dass** zwischen der Kryopumpe (21) und dem Verbraucher (5) ein Pufferbehälter (8) für warmen Wasserstoff angeordnet ist.

7. Multi-Kryospeichersystem nach zumindest einem der vorhergehenden Ansprüche,
**dadurch gekennzeichnet , dass** das Primär- und das Sekundärspeichersystem (30) über jeweilige Betankungsschnittstellen (14) separat betankt werden können.

## Claims

1. Multi-cryostorage system, comprising at least two cryocontainers for storing hydrogen, namely a primary storage system having an inner tank (1) and an outer container (2), and at least one secondary storage system (30) having a further inner tank and a further outer container, wherein the two cryocontainers are connected in hydraulic communication via a cryogenic connecting line (27), wherein at least one cryopump (21) is arranged in the inner tank (1) of the cryocontainer of the primary storage system, which supplies hydrogen unpressurised and/or pressurised, in one or more stages and at very low temperature, to a heat exchanger, which warms the hydrogen and delivers it further to a consumer (5) at a pressure higher than the pressure in the inner tank (1) wherein no cryopump is arranged in the secondary storage system (30), **characterized in that** the connecting line (27) has at least one, preferentially two check valves (25) near to the tanks, which are adapted to allow hydraulic pressure equilibration and that the cryopump supplies liquid and gaseous hydrogen.

2. Multi-cryostorage system according to Claim 1,
**characterized in that** the cryopump (21) is fully surrounded by cryogenic fluid during normal operation and/or the drive of the cryopump (21) is adapted to work at very low temperatures.

3. Multi-cryostorage system according to at least one of the preceding claims,
**characterized in that** the connecting line (27), preferentially downstream of the check valves (25) near to the tanks, only has line ends which are preferably routed in a region of the respective inner tank (1) near to the bottom, and/or **in that** the connecting line (27) is a line which is independent of extraction devices of the two cryocontainers.

4. Multi-cryostorage system according to at least one of the preceding claims,
**characterized in that** the primary storage system is adapted to return a partial flow of the warmed hydrogen, i.e. the extracted hydrogen downstream of the heat exchanger (7), via a return line into the inner tank (1) in order to increase the inner tank pressure, preferentially via a check valve (13) for the gas return to the inner tank (1).

5. Multi-cryostorage system according to at least one of the preceding claims,
**characterized in that** a pressure reducer (9), preferentially with a downstream pressure safety valve (10), is installed in the return line for the gas return to the inner tank (1).

6. Multi-cryostorage system according to at least one of the preceding claims,
**characterized in that** a buffer container (8) for warm hydrogen is arranged between the cryopump (21) and the consumer (5).

7. Multi-cryostorage system according to at least one of the preceding claims,
**characterized in that** the primary and secondary storage systems (30) can be filled separately via respective filling interfaces (14).

## Revendications

1. Système de stockage cryogénique multiple, comprenant au moins deux récipients cryogéniques pour le stockage d'hydrogène, à savoir un système de stockage primaire avec un réservoir intérieur (1) et un récipient extérieur (2) et au moins un système de stockage secondaire (30) avec un autre réservoir intérieur et un autre récipient extérieur, les deux récipients cryogéniques étant reliés de manière à communiquer hydrauliquement par l'intermédiaire d'une conduite de liaison cryogénique (27),
au moins une pompe cryogénique (21) étant agencée dans le réservoir intérieur (1) du récipient cryogénique du système de stockage primaire, laquelle amène de l'hydrogène sans pression et/ou sous pression,
à un ou plusieurs étages et à basse température à un échangeur de chaleur (7) qui réchauffe l'hydrogène et le transporte vers un consommateur (5) à une pression supérieure à la pression dans le réservoir intérieur, aucune pompe cryogénique n'étant agencée dans le système de stockage secondaire (30),
(1), **caractérisé en ce que** la conduite de liaison (27) dispose d'au moins une, de préférence de deux soupapes d'arrêt (25) situées à proximité du réservoir, qui sont adaptées pour permettre une compensation de pression hydraulique, et **en ce que** la pompe cryogénique amène de l'hydrogène liquide et gazeux.

2. Système de stockage cryogénique multiple selon la revendication 1,
**caractérisé en ce que** la pompe cryogénique (21) est entièrement entourée de fluide cryogénique en fonctionnement normal et/ou l'entraînement de la pompe cryogénique (21) est adapté pour fonctionner à des températures très basses.

3. Système de stockage cryogénique multiple selon au moins l'une quelconque des revendications précédentes,
**caractérisé en ce que** la conduite de liaison (27), de préférence après les soupapes d'arrêt (25) situées à proximité du réservoir, ne présente que des extrémités de conduite qui sont de préférence guidées dans une zone située à proximité du fond du réservoir intérieur (1) respectif et/ou **en ce que** la conduite de liaison (27) est une conduite indépendante des dispositifs de prélèvement des deux récipients cryogéniques.

4. Système de stockage cryogénique multiple selon au moins l'une quelconque des revendications précédentes,
**caractérisé en ce que** le système de stockage primaire est adapté pour pouvoir ramener un flux partiel de l'hydrogène chauffé, donc de l'hydrogène prélevé après l'échangeur de chaleur (7), par l'intermédiaire d'une conduite de retour dans le réservoir intérieur (1) pour augmenter la pression de réservoir intérieur, de manière préférée par une soupape d'arrêt (13) pour le retour de gaz au réservoir intérieur (1).

5. Système de stockage cryogénique multiple selon au moins l'une quelconque des revendications précédentes,
**caractérisé en ce qu'**un réducteur de pression (9), de manière préférée avec une soupape de sécurité de pression (10) montée en aval, est monté dans la conduite de retour pour le retour de gaz vers le réservoir intérieur (1).

6. Système de stockage cryogénique multiple selon au moins l'une quelconque des revendications précédentes,
**caractérisé en ce qu'**un contenant tampon (8) pour de l'hydrogène chaud est disposé entre la pompe cryogénique (21) et le consommateur (5).

7. Système de stockage cryogénique multiple selon au moins l'une quelconque des revendications précédentes,
**caractérisé en ce que** les systèmes de stockage primaire et secondaire (30) peuvent être alimentés séparément via des interfaces de ravitaillement respectives (14).
